# EUROPÄISCHE PATENTANMELDUNG

(11) **EP 4 173 742 A1**
(43) Veröffentlichungstag der Anmeldung: **03.05.2023**
(21) Anmeldenummer: 21205513.1
(22) Anmeldetag: 29.10.2021
(51) Int. Cl.: B22F 10/31, G06Q 50/04, G05B 19/418

(54) **BEWERTEN EINES AKTUELLEN PLANS EINES FERTIGUNGSPROZESSES ZUR FERTIGUNG EINES ZU FERTIGENDEN PRODUKTES**

(71) Anmelder: Siemens Aktiengesellschaft, 80333 München (DE)
(72) Erfinder: Baudisch, Thomas, 86938 Schondorf am Ammersee (DE); Hipp, Ulrich, 8406 Winterthur (CH); Joanni, Andreas, 80337 München (DE); Klein, Wolfram, 85579 Neubiberg (DE); Obst, Birgit, 80935 München (DE); Rossmüller, Christian, 94439 Roßbach (DE); Rothbauer, Stefan, 86156 Augsburg (DE); Wehrstedt, Jan Christoph, 81829 München (DE); Zeller, Marc, 81243 München (DE)
(74) Vertreter: Siemens Patent Attorneys

(57) **Zusammenfassung**

Die Erfindung betrifft ein Computer-implementiertes Verfahren zum Bewerten eines aktuellen Plans eines Fertigungsprozesses (10) zur Fertigung eines zu fertigenden Produktes; wobei der aktuelle Fertigungsprozess (10) eine Mehrzahl von Prozessschritten (12) in einer Abfolge aufweist; wobei das zu fertigende Produkt im aktuellen Fertigungsprozess (10) mittels mindestens einer Fertigungsvorrichtung gefertigt wird; aufweisend die Schritte a. Bereitstellen einer Mehrzahl von Key-Performance-Indikatoren, KPIs, für das zu fertigende Produkt (S1); b. Ermitteln eines Gesamt-Key-Performance-Indikators für das zu fertigende Produkt aus der Mehrzahl der Key-Performance-Indikatoren mittels einer ersten Regel (S2); c. Erfassen mindestens eines Prozessparameters (14) für jeden Prozessschritt (12) der Mehrzahl der Prozessschritte (12) durch mindestens eine Erfassungseinheit (S3); d. Bewerten des aktuellen Plans des Fertigungsprozesses auf Basis des ermittelten Gesamt-Key-Performance-Indikators und der erfassten Prozessparameter mittels einer zweiten Regel in Abhängigkeit von dem zu fertigenden Produkt (S4); und e. Durchführen mindestens einer Anpassungsmaßnahme, mindestens einer Verwerfungsmaßnahme hinsichtlich des Fertigungsprozesses oder Beibehaltung des Fertigungsprozesses in Abhängigkeit von der Bewertung (S5).

Ferner ist die Erfindung auf ein entsprechendes technisches System und Computerprogrammprodukt gerichtet.

## Beschreibung

### 1. Technisches Gebiet

Die Erfindung betrifft ein computer-implementiertes Verfahren zum Bewerten eines aktuellen Plans eines Fertigungsprozesses zur Fertigung eines zu fertigenden Produktes. Ferner betrifft die Erfindung ein entsprechendes technisches System sowie Computerprogrammprodukt.

### 2. Stand der Technik

Die additive Fertigung ("additive manufacturing") gewinnt als Fertigungsverfahren innerhalb der Fertigungstechnologien zunehmend an Bedeutung. Dabei wird die additive Fertigung im industriellen Kontext auch als 3D-Druck bezeichnet und unterscheidet sich grundlegend von konventionellen Fertigungsprozessen.

Der Fertigungsprozess besteht bei der additiven Fertigung aus dem Druck der Komponenten oder der Bauteile und weiteren nachgelagerten Bearbeitungsschritten. Der Druckprozess selbst wird durch zahlreiche Prozessparameter, wie die Schmelzleistung, die Materialvorschubgeschwindigkeit, die Verfahrgeschwindigkeit der Achsen und die Temperatur des Materialbetts aber auch der Auswahl des Druckers sowie der Lage der Objekte im Raum etc. beeinflusst. Mögliche Nachbearbeitungsschritte sind die Oberflächenbehandlung, das Kühlen und das Entfernen von Stützstrukturen etc.

Ferner eignet sich die additive Fertigung für die Fertigung von Anschauungs- und Funktionsprototypen ("Rapid Prototyping"), Endprodukten ("Rapid Manufacturing") sowie Werkzeugen und Formen ("Rapid Tooling"). Es sind ferner unterschiedliche Techniken der additiven Fertigung bekannt, beispielsweise das Schmelzschichtungsverfahren (Fused Deposition Modeling - FDM), das selektive Lasersintern (SLS), das selektive Laserschmelzen (SLM) und das Auftragsschweißen.

Nachteilig an der additiven Fertigung sind jedoch die hohen Kosten. Die Produktionskosten übersteigen in vielen Fällen noch die Kosten herkömmlicher Fertigungsprozesse. Ein Grund hierfür liegt in der derzeit noch stark schwankenden Stabilität und Reproduzierbarkeit des Additiven Fertigungs-Prozesses.

Das Endresultat des Additiven Fertigungs-Prozesses wird durch die Prozessparameter der einzelnen Prozessschritte und die Verteilung dieser Prozessschritte auf die zur Auswahl stehenden Fertigungsvorrichtungen signifikant beeinflusst. Die Definition, Parametrierung, Umsetzung sowie Optimierung des Additiven Fertigungs-Prozesses erfolgt herkömmlicherweise gemäß dem Stand der Technik erfahrungsbasiert und ist somit von der individuellen Erfahrung ("trial and error") eines Experten abhängig. Dadurch entsteht meist ein relativ hoher unerwünschter Anteil an Ausschuss. Darüber hinaus hängt auch die Qualität des finalen Ergebnisses des Additiven Fertigungs-Prozesses von seiner Erfahrung ab und ist folglich im Vorhinein schlecht bewertbar und stellt sich oft als unzureichend heraus. Der hohe Ausschuss und die oftmals mangelnde Qualität erhöhen ggf. die Nachbereitungskosten oder wirken direkt negativ Produktionskosten.

Die vorliegende Erfindung stellt sich daher die objektive technische Aufgabe ein computer-implementiertes Verfahren zum Bewerten eines aktuellen Plans eines Fertigungsprozesses zur Fertigung eines zu fertigenden Produktes bereitzustellen, welches zuverlässiger und effizienter ist und dessen zu erwartendes Ergebnis vor Ausführung des Plans ermittelt werden kann.

### 3. Zusammenfassung der Erfindung

Die oben genannte Aufgabe wird erfindungsgemäß durch ein computer-implementiertes Verfahren zum Bewerten eines aktuellen Plans eines Fertigungsprozesses zur Fertigung eines zu fertigenden Produktes gelöst; wobei
der aktuelle Fertigungsprozess eine Mehrzahl von Prozessschritten in einer Abfolge aufweist; wobei
das zu fertigende Produkt im aktuellen Fertigungsprozess mittels mindestens einer Fertigungsvorrichtung gefertigt wird;
aufweisend die Schritte
   a. Bereitstellen einer Mehrzahl von Key-Performance-Indikatoren, KPIs, für das zu fertigende Produkt;
   b. Ermitteln eines Gesamt-Key-Performance-Indikators für das zu fertigende Produkt aus der Mehrzahl der Key-Performance-Indikatoren mittels einer ersten Regel;
   c. Erfassen mindestens eines Prozessparameters für jeden Prozessschritt der Mehrzahl der Prozessschritte durch mindestens eine Erfassungseinheit;
   d. Bewerten des aktuellen Plans des Fertigungsprozesses auf Basis des Gesamt-Key-Performance-Indikators und der erfassten Prozessparameter mittels einer zweiten Regel in Abhängigkeit von dem zu fertigenden Produkt; und
   e. Durchführen mindestens einer Anpassungsmaßnahme, mindestens einer Verwerfungsmaßnahme hinsichtlich des Fertigungsprozesses oder Beibehaltung des Fertigungsprozesses in Abhängigkeit von der Bewertung.

Dementsprechend ist die Erfindung auf ein computer-implementiertes Verfahren zum Bewerten eines aktuellen Plans eines Fertigungsprozesses gerichtet. Der Plan ist vorzugsweise ein digitaler Plan, der die Prozessschritte, die Abfolge oder Reihenfolge der Prozessschritte, die zugeordneten Fertigungsvorrichtungen und/oder die Parameter umfassen kann. Die Fertigung kann auch als Produktion bezeichnet werden. Mit anderen Worten wird der aktuelle Plan hinsichtlich des Fertigungsprozesses analysiert und bewertet. Der Fertigungsprozess dient der Fertigung des zu fertigenden Produktes. Das Produkt wird in unterschiedlichen Prozessschritten mittels einer Fertigungsvorrichtung gefertigt. Für die Prozessschritte können eine oder auch mehrere gleiche oder unterschiedliche Fertigungsvorrichtungen zum Einsatz kommen.

Der Eingabedatensatz für die Bewertung umfasst einen Gesamt-KPI und mehrere Prozessparameter. In den ersten beiden Schritten wird ein Gesamt-KPI auf Basis einer Mehrzahl von KPIs für das zu fertigende Produkt mittels einer ersten Regel ermittelt. Die KPIs können dabei über eine oder mehrere Schnittstellen empfangen werden. Die KPIs dienen der formalen Zieldefinition des Produkts. Mit anderen Worten werden die gewünschten Eigenschaften des Produkts mithilfe der KPIs beschrieben. Der Gesamt-KPI definiert das Gesamtziel für das Produkt.

Im dritten Schritt werden die Prozessparameter für die Prozessschritte erfasst. Die Datenerfassung erfolgt durch eine oder mehrere Erfassungseinheiten. Beispielsweise können für unterschiedliche Prozessparameter und/oder Datentypen auch unterschiedliche Erfassungseinheiten eingesetzt werden. Für die Erfassung der Temperatur als ein Prozessparameter im Prozessschritt "Cooling" kann eine Temperatursensor verwendet werden. Mit anderen Worten werden die Prozessparameter, die in den einzelnen Prozessschritten verwendet werden, erfasst und gesammelt. Zusätzlich zu den Prozessparametern können auch die erreichten Ergebnisse und/oder andere Informationen gesammelt werden. Dies gilt insbesondere für das Sammeln der verschiedenen KPIs, so dass eine finale Bewertung jedes erfassten Prozesses automatisiert möglich ist.

Der der aktuelle Plan des Fertigungsprozesses wird anhand des Eingabedatensatz im Bewertungsschritt mittels einer zweiten Regel in Abhängigkeit des zu fertigenden Produktes bewertet. Die Bewertung kann auch als systematische Analyse bezeichnet werden.

Abhängig von der Bewertung wird im Schritt eine Maßnahme eingeleitet, entweder eine Anpassungsmaßnahme zur Anpassung des aktuellen Plans oder aber zu seiner Verwerfung. Alternativ wird keine Maßnahme ergriffen, somit bleibt der aktuelle Fertigungsprozess oder der aktuelle unverändert bzw. wird beibehalten.

Mit anderen Worten ist die Bewertung erforderlich, um zu ermitteln, ob eine oder mehrere Maßnahmen erforderlich sind und eingeleitet werden müssen oder aber keine Maßnahmen erforderlich sind.

Bei der Anpassung erfolgt eine Änderung. Die Änderung kann das Hinzufügen oder das Entfernen eines oder mehrerer Faktoren des Fertigungsprozesses, wie Fertigungsvorrichtung oder Eingabedaten, umfassen. Beispielsweise kann eine Fertigungsvorrichtung durch eine andere ersetzt werden oder Prozessparameter geändert werden etc. Bei der Verwerfung wird der aktuelle Fertigungsprozess gestoppt und unterbrochen oder beendet.

Im Gegensatz zum Stand der Technik erfolgt eine systematische Erfassung der Daten über alle Prozessschritte des additiven Fertigungs-Prozesses, inklusive der jeweils erreichten Produktqualität bezogen auf die für das Produkt relevanten KPIs sowie eine abschließende Zusammenführung der Daten aus den einzelnen Prozessschritten aller Fertigungsvorrichtungen für eine systematische Nutzung.

Das erfindungsgemäße Verfahren hängt vorteilhafterweise nicht von den Erfahrungen eines Experten ab und ist folglich zuverlässiger sowie effizienter. Der Ausschuss an Produkten wird verringert, die Produktqualität wird erhöht und die Kosten werden insgesamt verringert.

Durch die Bewertung und die anschließenden Maßnahmen kann der Fertigungsprozess vorteilhafterweise verbessert und optimiert werden. Neue Fertigungsprozesse können geplant werden. Bestehende Fertigungsprozesse können verbessert und optimiert werden.

In einer Ausgestaltung ist die Fertigung eine additive Fertigung, AM (Additive Manufacturing).

In einer weiteren Ausgestaltung liegt der aktuelle Plan in einem digitalen oder maschinenlesbaren Format vor.

In einer weiteren Ausgestaltung ist die Erfassungseinheit eine Sensoreinheit, Kameraeinheit oder Bilderkennungseinheit.

In einer weiteren Ausgestaltung ist die erste Regel eine Aggregationsregel, ausgewählt aus der Gruppe, bestehend aus einer Gewichtungsregel und einer Bedeutungsregel, z. B. Gewichteter Mittelwert.

In einer weiteren Ausgestaltung ist die zweite Regel ein Reinforcement Learning-Ansatz, ein simulativer Ansatz oder ein stochastischer Ansatz.

In einer weiteren Ausgestaltung ist die mindestens eine Anpassungsmaßnahme eine Maßnahme, ausgewählt aus der Gruppe, bestehend aus:
- Anpassen des mindestens einen Key-Performance-Indikators aus der Mehrzahl der Key-Performance-Indikatoren;
- Anpassen des mindestens einen Prozessparameters;
- Anpassen des Ablaufs der Prozessschritte der Mehrzahl der Prozessschritte des Fertigungsprozesses;
- Anpassen des mindestens einen Prozessschritts der Mehrzahl der Prozessschritte des Fertigungsprozesses;
- Anpassen der mindestens einen Erfassungseinheit;
- Anpassen der mindestens einen Fertigungsvorrichtung; und
- Anpassen der ersten Regel oder zweiten Regel.

Dementsprechend wird nach der Bewertung mittels der Anpassungsmaßnahme die Anpassung durchgeführt. Die Anpassung kann auch als Änderung bezeichnet werden. Die Bewertung kann beispielsweise ergeben, dass ein oder mehrere Faktoren angepasst werden müssen. Die Faktoren können entfernt, ausgetauscht oder hinzugefügt werden.

Beispielsweise ist eine Fertigungsvorrichtung sicherheitsrelevant oder sicherheits-kritisch und weist ein Fehlverhalten oder eine Fehlfunktion auf. Die als fehlerhaft erkannte Fertigungsvorrichtung kann vorteilhafterweise nach der Bewertung durch eine andere funktionsfähige Vorrichtung ersetzt werden. Alternativ kann auch eine andere Vorrichtung effizienter in Bezug auf den Fertigungsprozess sein, beispielsweise hinsichtlich Produktionszeiten oder Kosten, und ausgewählt werden.

Ferner kann die Bewertung ergeben, dass eine Fertigungsvorrichtung eine nachteilige Auswirkung auf Mensch und/oder Maschine, wie technisches System oder Steuerung, hat. Die Auswirkung kann beispielsweise eine Fehlsteuerung des technischen Systems oder einer Einheit sein und die Sicherheit von Mensch und/oder Maschine gefährden. In diesem Fall kann eine Maßnahme zuverlässig und effizient eingeleitet werden, um die Gefahr zu beseitigen. Die Maßnahme kann die Abschaltung der Fertigungsvorrichtung betreffen und/oder deren Austausch.

Somit wird die Sicherheit des Fertigungsprozesses erheblich verbessert, ein Mensch- und/oder ein Maschinen-Schaden wird zuverlässig verhindert und der Fertigungsprozess insgesamt effizienter.

Ferner können die KPIs flexibel und dynamisch erweitert werden, folglich die KPIs und die Produktqualität vorteilhafterweise an die Bedürfnisse oder konkrete Anwendung wie Produkt angepasst werden. Dadurch wird die Produktqualität verbessert.

Weiterhin kann die Produktqualität optimiert werden, in dem Sinne dass auch eine verringerte Qualität bei geringeren Kosten gewünscht sein kann.

Die Maßnahmen können gleichzeitig, nacheinander oder auch stufenweise durchgeführt werden. Sie werden vorteilhafterweise zeitnah sowie effizient ergriffen.

Die Anpassung des aktuellen Fertigungsprozesses oder des aktuellen Plans resultiert in einen angepassten Plan als Ausgabedatensatz.

In einer weiteren Ausgestaltung weist das Verfahren weiterhin mindestens einen der folgenden Schritte auf:
- Bereitstellen des angepassten Plans nach Durchführung der mindestens einen Anpassungsmaßnahme;
- Speichern des angepassten Plans nach Durchführung der mindestens einen Anpassungsmaßnahme in einer Speichereinheit, wobei die Speichereinheit als ein flüchtiges oder nicht-flüchtiges Speichermedium ausgebildet ist, bevorzugt als Datenbank oder als Cloud;
- Einleiten der Fertigung des zu fertigenden Produktes nach Durchführung der mindestens einen Anpassungsmaßnahme;
- Fertigen des zu fertigenden Produktes anhand des angepassten Plans durch die mindestens eine Fertigungsvorrichtung nach Durchführung der mindestens einen Anpassungsmaßnahme; und
- Übermitteln des angepassten Plans an die mindestens eine Fertigungsvorrichtung oder andere technische Einheit zur Fertigung nach Durchführung der mindestens einen Anpassungsmaßnahme.

Der Ausgabedatensatz kann in einem oder mehreren weiteren Schritten behandelt werden. Die Schritte sind auf die Bereitstellung, Speicherung oder Übermittlung des Ausgabedatensatzes gerichtet sowie auf die Fertigung des zu fertigenden Produktes anhand des Ausgabedatensatzes. Mit anderen Worten wird angepasste Plan anstelle des bisherigen aktuellen verwendet und die Fertigung des zu fertigenden Produkten zuverlässiger und effizienter.

In einer weiteren Ausgestaltung ist die Verwerfungsmaßnahme auf die Verwerfung des aktuellen Fertigungsprozesses oder des aktuellen Plans gerichtet und eine Maßnahme ist, ausgewählt aus der Gruppe, bestehend aus:
- Unterbrechen des aktuellen Fertigungsprozesses;
- Abbrechen oder Beenden des aktuellen Fertigungsprozesses; und
- Fortsetzen des aktuellen Fertigungsprozesses nach einer Unterbrechung oder nach Durchführen einer Maßnahme.

Dementsprechend wird nach der Bewertung mittels der Verwerfungsmaßnahme der aktuelle Fertigungsprozess oder der aktuelle Plan verworfen. Die Maßnahme zielt darauf ab, die aktuelle Fertigung auf Basis des aktuellen Plans einzustellen. Anstelle einer Anpassung kann nach der Unterbrechung oder dem Abbruch beispielsweise eine weitere Analyse des Plans erfolgen oder ein neuer anderer Plan zur Fertigung verwendet werden etc.

Die Erfindung betrifft ferner ein technisches System. Dementsprechend wird das erfindungsgemäße Verfahren durch ein technisches System durchgeführt. Das technische System kann ein oder mehrere Untereinheiten wie Recheneinheiten aufweisen. Beispielsweise können ein Verfahrensschritt oder mehrere auf einer Recheneinheit durchgeführt werden. Andere Verfahrensschritte können auf der gleichen oder einer anderen Recheneinheit durchgeführt werden. Zusätzlich kann das technische System auch Speichereinheiten etc. aufweisen.

Die Erfindung betrifft ferner ein Computerprogrammprodukt mit einem Computerprogramm, das Mittel zur Durchführung des oben beschriebenen Verfahrens, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

### 4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.
- FIG 1: zeigt ein Ablaufdiagramm des erfindungsgemäßen Verfahrens.
- FIG 2: zeigt einen Fertigungsprozess mit Prozessschritten gemäß einer Ausführungsform der Erfindung.

### 5. Beschreibung der bevorzugten Ausführungsformen

Im Folgenden werden bevorzugte Ausführungsformen der vorliegenden Erfindung in Bezug auf die Figuren beschrieben.

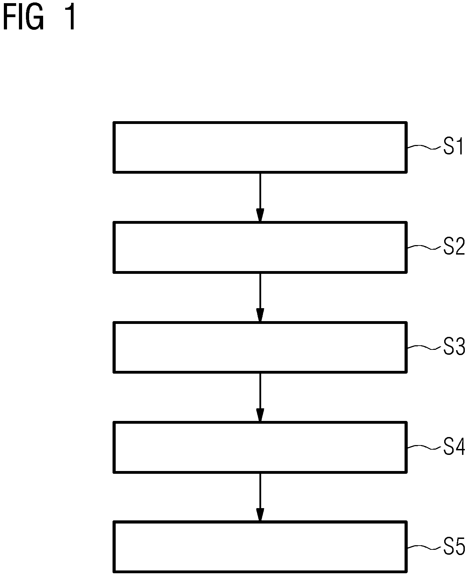

Figur 1 stellt ein Ablaufdiagramm des erfindungsgemäßen Verfahrens mit den Verfahrensschritten S1 bis S5 schematisch dar.

Bereitstellen der Mehrzahl der Key-Performance-Indikatoren, KPIs, für das zu fertigende Produkt und Ermitteln des Gesamt-KPIs S1, S2

Das zu fertigende Produkt und/oder die zugehörigen Produktziele können mit den KPIs beschrieben werden. Beispiele für mögliche KPIs sind Kosten, Produktionszeit, Produktqualität und verbrauchte Ressourcen etc. Die KPIs können Produkt-, Anlagen- oder situationsabhängig definiert sein. Der Gesamt-KPI wird auf Basis der Mehrzahl der KPIs ermittelt, bevorzugt durch die Definition von Gewichten der KPIs und die Berechnung eines gewichteten Mittelwerts. Die Gewichte können ebenfalls Produkt-, Anlagen- oder situationsabhängig gewählt werden. Sie beschreiben die relative Wichtigkeit einzelner KPIs für das Produkt bzw. dessen Anwendung oder Einsatzzweck.

### Erfassen der Prozessparameter S3

Beispielhafte Prozessparameter 14 sind im Folgenden aufgelistet:
- Parameter des Prozessschrittes
- Parameter der Fertigungsvorrichtung auf der der Prozessschritt ausgeführt wird
- Eigenschaften der verwendeten Materialien für den Prozessschritt
- Umweltparameter
- Bewertung des in diesem Prozessschritt erreichten Ergebnisses und
- weitere Daten, abhängig vom konkreten Fertigungsprozess

Gemäß einer Ausführungsform der Erfindung erfolgt die Parametererfassung automatisch durch eine oder mehrere Erfassungseinheiten, wie Sensoreinheiten oder Kameraeinheiten. Die Sensoreinheiten können als beliebige Sensoren, wie Temperatursensoren etc. ausgebildet sein. Die Kameraeinheiten können als beliebige Kameras zur Bilderkennung ausgebildet sein. Eine beispielhafte Kamera ist eine Multispektralkamera. Die Datenerfassung ist vorteilhafterweise quantitativ und qualitativ. Die erfassten Prozessparameter und/oder weitere relevante Informationen für die Bewertung in den Schritten S4 und S5 können in einer Speichereinheit gespeichert werden, wie in einer zentralen Datenbank. Weitere relevante Informationen sind beispielsweise Zeitstempel etc. Dadurch können vorteilhafterweise Erfahrungen aus den Fertigungsprozessessen 10 verschiedener Produkte für die einzelnen Prozessschritte 12 mit unterschiedlichen Prozessparametern 14 gesammelt werden. Zusätzlich zu den erfassten Prozessparametern 14 können nach der Durchführung der einzelnen Prozessschritte 12 auch die jeweils erreichten Ergebnissen in Form der KPIs erfasst und gesammelt werden.

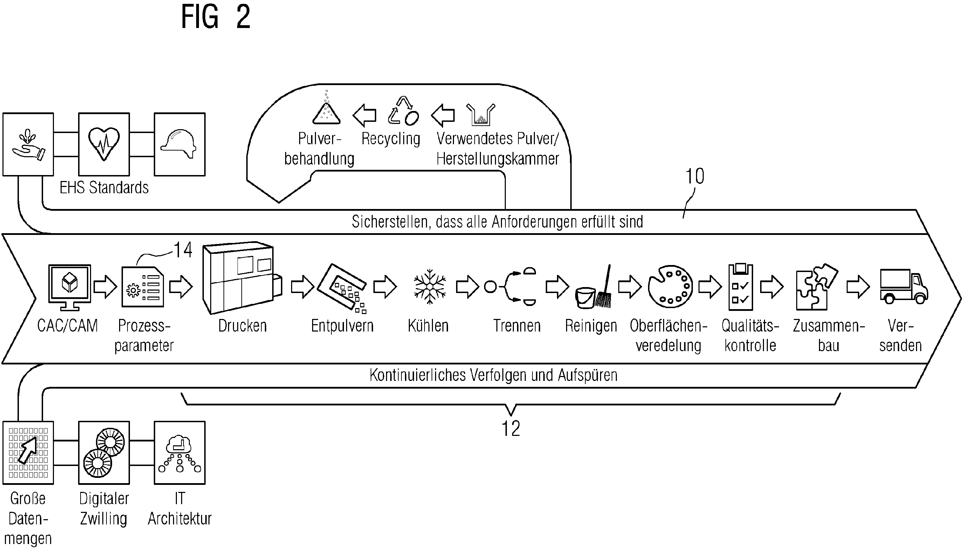

Figur 2 zeigt einen Fertigungsprozess 10 mit Prozessschritten 12 gemäß einer Ausführungsform der Erfindung. Einige der Prozessschritte 12, wie Druckprozess, werden im Folgenden im Detail erläutert:
Prozessschritt: Druckprozess ("Printing")
   - Parameter und ID der Fertigungsvorrichtung auf der der Prozessschritt ausgeführt wird
   - Eingangsdaten, Modell und Programm
   - Umweltparameter, wie Temperatur, Luftdruck und Luftfeuchtigkeit
   - Materialqualität, wie Klasse und Schwankung
   - Bilder der Oberflächenbeläge ("Layeroberflächen"), beispielsweise vor und nach dem Aufbringen eines Belags ("Layers")
Prozessschritt: Entpudern ("Depowdering")
   - Parameter und ID der Fertigungsvorrichtung auf der der Prozessschritt ausgeführt wird
   - Gewicht des Bauteils, beispielsweise vorher, nachher, Computer-Aided Design and Drafting, CAD,- Referenzwert
   - Qualität des losen Materials
Prozessschritt: Kühlen ("Cooling")
   - Parameter und ID der Fertigungsvorrichtung auf der der Prozessschritt ausgeführt wird
   - Gradient des Abkühlprozesses, Temperaturverlauf (Start, End) und Dokumentation der Messstellen
Prozessschritt: Trennung ("Separation")
   - Parameter und ID der Fertigungsvorrichtung auf der der Prozessschritt ausgeführt wird
   - Oberflächenqualität
   - Formvergleich mit Modell
Prozessschritt: Oberflächenfertigung ("Surface Finishing")

Die Oberflächenfertigung kann das Polieren, das Färben und/oder das Veredeln umfassen.
- Parameter und ID der Fertigungsvorrichtung auf der der

Prozessschritt ausgeführt wird
- Oberflächenqualität
- Prozessparameter

Bewertung des aktuellen Plans des Fertigungsprozesses und anschließende Durchführung einer entsprechenden Maßnahme S4 und S5

Im Verfahrensschritt S4 wird der aktuelle Plan des Fertigungsprozesses 10 bewertet, beispielsweise hinsichtlich einer konkreten Anwendung, Domäne oder anderen Bedingung. Die Bewertung dient dazu eine Aussage über den damit voraussichtlich zu erreichenden Gesamt-KPI für das zu fertigende Produkt in seinem vorgesehenen Anwendungszweck zu erhalten. Der Eingabedatensatz umfassend den Gesamt-KPI und die Prozessparameter aus den Verfahrensschritten S1 bis S3 werden für die Bewertung in Schritt S4 verwendet.

Gemäß einer Ausführungsform der Erfindung erfolgt eine Mittelwertbildung über den Eingabedatensatz. Alternativ kann auch eine worst-case Abschätzung oder eine andere Abschätzung erfolgen. Eine andere beispielhafte Abschätzung ist auf die mit einer gewissen Sicherheit zu erreichenden Produktqualität gerichtet, beispielsweise mit 95% Wahrscheinlichkeit über dem gesetzten Ziel des KPIs (x%-quantil). Eine weitere Ausführungsform berücksichtigt Randbedingungen an eine Produktanforderung (etwa Minimalqualität oder Kosten) unter gleichzeitiger Maximierung der Produktqualität.

Gemäß einer Ausführungsform der Erfindung kann der Eingabedatensatz auch abhängig von der konkreten Anwendung eingeschränkt oder gefiltert werden. Mit anderen Worten, wird ein Filterschritt zwischengeschaltet, vor die Bewertung.

Beispielsweise können die folgenden Eingabedatensätze relevant sein und für die Bewertung ausgewählt sowie verwendet werden
- die auf derselben Fertigungsvorrichtung oder auf der baugleichen Fertigungsvorrichtungen gefertigt werden
- bei denen der Anwendungszweck des Produkts ähnlich ist und/oder
- deren Vorgeschichte gegeben durch die KPIs ähnlich ist. Dies kann im Fall des ersten Produktionsschritts, beispielsweise die Materialqualität des verwendeten Materials oder die Parameter der verwendeten ersten Maschine sein.

Im Folgenden sind beispielhaften Anwendungsfälle erläutert:
Einsatz des erfindungsgemäßen Verfahrens vor Beginn der Fertigung:
- für eine konkrete Planung, um die Entscheidung zu treffen oder zu unterstützen, ob der geplante Fertigungsprozess voraussichtlich die Ziele erfüllen wird
- für eine Menge an manuell definierten oder generierten Produktionsplanungsoptionen, um aus dieser Menge die beste Möglichkeit auszuwählen

Einsatz des erfindungsgemäßen Verfahrens während der Fertigung, unter Berücksichtigung der bis dahin verfügbaren Informationen, insbesondere die in bisherigen Prozessschritten beobachtete erreichte Ergebnisqualität
- für den aktuell geplanten Fertigungsprozess, um zu entscheiden, ob mit diesem Fertigungsprozess und damit den nächsten Prozessschritten weitergearbeitet werden sollte, ob nach Alternativen gesucht werden sollte, oder ob der Prozess abgebrochen werden sollte, da die Chancen auf ein erfolgreiches Ergebnis nicht ausreichend sind
- für eine Menge an möglichen Folgeprozessen (z. B. für dasselbe Produkt), ausgehend vom erreichten Stand, um die beste Option auszuwählen

Die erfassten und gesammelten Daten aus dem erfindungsgemäßen Verfahren können gemäß einer Ausführungsform der Erfindung auch für die Erzeugung vielversprechender Produktionsprozesse genutzt werden. Dabei können Reinforcement-Learning Ansätzen eingesetzt werden, in denen die Produktionsstrategie und die Erfahrungen bewertet werden.

Gemäß einer Ausführungsform der Erfindung können die erfassten und gesammelten Daten auch erweitert werden und somit die Datenbasis verbessert werden. Die Daten, die in der Fertigung von vorhandenen Erfahrungen abweichen (z. B. auf Basis neuer Erkenntnisse über die Produktionsprozesse) können beispielsweise ebenfalls hinterlegt werden.

## Patentansprüche

1. Computer-implementiertes Verfahren zum Bewerten eines aktuellen Plans eines Fertigungsprozesses (10) zur Fertigung eines zu fertigenden Produktes; wobei
der aktuelle Fertigungsprozess (10) eine Mehrzahl von Prozessschritten (12) in einer Abfolge aufweist; wobei
das zu fertigende Produkt im aktuellen Fertigungsprozess (10) mittels mindestens einer Fertigungsvorrichtung gefertigt wird;
aufweisend die Schritte
a. Bereitstellen einer Mehrzahl von Key-Performance-Indikatoren, KPIs, für das zu fertigende Produkt (S1);
b. Ermitteln eines Gesamt-Key-Performance-Indikators für das zu fertigende Produkt aus der Mehrzahl der Key-Performance-Indikatoren mittels einer ersten Regel (S2);
c. Erfassen mindestens eines Prozessparameters (14) für jeden Prozessschritt (12) der Mehrzahl der Prozessschritte (12) durch mindestens eine Erfassungseinheit (S3);
d. Bewerten des aktuellen Plans des Fertigungsprozesses auf Basis des ermittelten Gesamt-Key-Performance-Indikators und der erfassten Prozessparameter mittels einer zweiten Regel in Abhängigkeit von dem zu fertigenden Produkt (S4); und
e. Durchführen mindestens einer Anpassungsmaßnahme, mindestens einer Verwerfungsmaßnahme hinsichtlich des Fertigungsprozesses oder Beibehaltung des Fertigungsprozesses in Abhängigkeit von der Bewertung (S5) .

2. Computer-implementiertes Verfahren nach Anspruch 1, wobei die Fertigung eine additive Fertigung, AM (Additive Manufacturing), ist.

3. Computer-implementiertes Verfahren nach Anspruch 1 oder 2, wobei der aktuelle Plan in einem digitalen oder maschinenlesbaren Format vorliegt.

4. Computer-implementiertes Verfahren nach einem der vorhergehenden Ansprüche, wobei die Erfassungseinheit eine Sensoreinheit, Kameraeinheit oder Bilderkennungseinheit ist.

5. Computer-implementiertes Verfahren nach einem der vorhergehenden Ansprüche, wobei die erste Regel eine Aggregationsregel ist, ausgewählt aus der Gruppe, bestehend aus einer Gewichtungsregel und einer Bedeutungsregel.

6. Computer-implementiertes Verfahren nach einem der vorhergehenden Ansprüche, wobei die zweite Regel ein Reinforcement Learning-Ansatz, ein simulativer Ansatz oder ein stochastischer Ansatz ist.

7. Computer-implementiertes Verfahren nach einem der vorhergehenden Ansprüche, wobei die mindestens eine Anpassungsmaßnahme eine Maßnahme ist, ausgewählt aus der Gruppe, bestehend aus:
- Anpassen des mindestens einen Key-Performance-Indikators aus der Mehrzahl der Key-Performance-Indikatoren;
- Anpassen des mindestens einen Prozessparameters;
- Anpassen des Ablaufs der Prozessschritte der Mehrzahl der Prozessschritte des Fertigungsprozesses;
- Anpassen des mindestens einen Prozessschritts der Mehrzahl der Prozessschritte des Fertigungsprozesses;
- Anpassen der mindestens einen Erfassungseinheit;
- Anpassen der mindestens einen Fertigungsvorrichtung; und
- Anpassen der ersten Regel oder der zweiten Regel.

8. Computer-implementiertes Verfahren nach Anspruch 7, weiterhin aufweisend mindestens einen der folgenden Schritte:
- Bereitstellen des angepassten Plans nach Durchführung der mindestens einen Anpassungsmaßnahme;
- Speichern des angepassten Plans nach Durchführung der mindestens einen Anpassungsmaßnahme in einer Speichereinheit, wobei die Speichereinheit als ein flüchtiges oder nicht-flüchtiges Speichermedium ausgebildet ist, bevorzugt als Datenbank oder als Cloud;
- Einleiten der Fertigung des zu fertigenden Produktes nach Durchführung der mindestens einen Anpassungsmaßnahme;
- Fertigen des zu fertigenden Produktes anhand des angepassten Plans durch die mindestens eine Fertigungsvorrichtung nach Durchführung der mindestens einen Anpassungsmaßnahme; und
- Übermitteln des angepassten Plans an die mindestens eine Fertigungsvorrichtung oder andere technische Einheit zur Fertigung nach Durchführung der mindestens einen Anpassungsmaßnahme.

9. Computer-implementiertes Verfahren nach einem Ansprüche 1 bis 6, wobei die Verwerfungsmaßnahme auf die Verwerfung des aktuellen Plans gerichtet ist und eine Maßnahme ist, ausgewählt aus der Gruppe, bestehend aus:
- Unterbrechen des aktuellen Fertigungsprozesses;
- Abbrechen oder Beenden des aktuellen Fertigungsprozesses; und
- Fortsetzen des aktuellen Fertigungsprozesses nach einer Unterbrechung oder nach Durchführen einer Maßnahme.

10. Technisches System zum Durchführen des computerimplementierten Verfahrens nach einem der vorhergehenden Ansprüche.

11. Computerprogrammprodukt mit einem Computerprogramm, das Mittel zur Durchführung des Verfahrens nach einem der Ansprüche 1 bis 9 aufweist, wenn das Computerprogramm auf einer programmgesteuerten Einrichtung zur Ausführung gebracht wird.
